# EUROPEAN PATENT SPECIFICATION

(11) **EP 4 027 449 B1**
(45) Date of publication and mention of the grant of the patent: **11.11.2026**
(21) Application number: 21756338.6
(22) Date of filing: 13.01.2021
(51) Int. Cl.: H01M 50/572, H01M 50/502, H01M 10/48, H01M 50/503

(54) **BATTERY MODULE, AND BATTERY PACK AND VEHICLE INCLUDING BATTERY MODULE**
BATTERIEMODUL UND BATTERIEPACK UND FAHRZEUG MIT DEM BATTERIEMODUL
MODULE DE BATTERIE, ET BLOC-BATTERIE ET VÉHICULE COMPRENANT LE MODULE DE BATTERIE

(30) Priority: 17.02.2020 KR 20200019307
(43) Date of publication of application: 13.07.2022
(73) Proprietor: LG ENERGY SOLUTION, LTD., Seoul 07335 (KR)
(72) Inventor: JIN, Hee-Jun, Daejeon 34122 (KR); MUN, Jeong-O, Daejeon 34122 (KR); CHI, Ho-June, Daejeon 34122 (KR)
(74) Representative: Hoffmann Eitle
(86) International application number: PCT/KR2021/000507
(87) International publication number: WO 2021/167249

(56) References cited:
- WO-A1-2019/190072
- JP-B2- 5 577 802
- KR-A- 20170 028 647
- KR-A- 20190 001 409
- KR-A- 20190 071 454
- US-A1- 2014 127 548
- US-A1- 2018 212 215

## Description

### TECHNICAL FIELD

The present disclosure relates to a battery module, and a battery pack and a vehicle including the battery module.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack by using at least one battery module and adding other components.

If the conventional battery module is exposed to environmental changes such as temperature changes, dew condensation may occur inside the battery module. Water generated by the dew condensation phenomenon may be filled to a predetermined height inside the battery module. In addition, there is a risk that a short circuit may occur between sensing bus bars inside the battery module due to the water generated by dew condensation.

Therefore, it is required to find a way to prevent the sensing bus bars from being short-circuited when dew condensation occurs inside the battery module.

WO 2019/190072 A1 relates to a battery module. The battery module includes a cell stack including a plurality of battery cells. The cell stack and a bus bar frame are inserted in a mono frame in an assembled state. Electrode leads of the individual battery cells pass through a slot of a plate. The electrode leads are bent in contact with the surfaces of corresponding bus bars and ultrasonic welding is performed to fix the electrode leads to the bus. A sensing member, which includes a circuit board and a cable, is disposed at an upper plate.

US 2018/212215 A1 concerns an integrated cartridge. Battery cells are inserted into cell insert slots so that electrode lead portions are oriented toward a front plate. Electrode leads of the battery cells extend outward from the inside of the front plate through lead passing holes. Lead connecting bus bars are fixed at the front plate. A cover plate is coupled to main frames to form an outer shape of the integrated.

### DISCLOSURE

### Technical Problem

Therefore, the present disclosure is directed to providing a battery module, which may prevent sensing bus bars from being short-circuited when dew condensation occurs in the battery module, and a battery pack and a vehicle including the battery module.

### Technical Solution

In one aspect of the present invention, there is provided a battery module as defined in claim 1, comprising: a plurality of battery cells; a module case configured to accommodate the plurality of battery cells, wherein the module case includes a base plate which forms the bottom of the module case, the base plate having an area capable of supporting a lower portion of the plurality of battery cells; and a bus bar assembly provided inside the module case and electrically connected to electrode leads of the plurality of battery cells, wherein the bus bar assembly includes: a bus bar frame disposed to at least one of front and rear sides of the plurality of battery cells; a plurality of lead slots provided in the bus bar frame so that electrode leads of the plurality of battery cells pass therethrough; a plurality of sensing bus bars disposed to face the plurality of lead slots and connected to the electrode leads of the plurality of battery cells; and a plurality of short-circuit prevention units configured to cover at least one end of the plurality of sensing bus bars and configured to surround the at least one end of the plurality of sensing bus bars. The plurality of short-circuit prevention units are provided to the bus bar frame to cover lower ends of the plurality of sensing bus bars.

The plurality of short-circuit prevention units may have a predetermined accommodation space formed to accommodate the lower end of each sensing bus bar.

The plurality of sensing bus bars may be inserted into the short-circuit prevention units while sliding from the top to the bottom of the bus bar frame.

The plurality of short-circuit prevention units may be integrally formed with the bus bar frame.

The plurality of short-circuit prevention units may be provided between a lower end of the bus bar frame and the plurality of lead slots.

The plurality of short-circuit prevention units may have an insulating material.

The plurality of short-circuit prevention units may be made of a rubber material.

**In** addition, the present invention further provides a battery pack as defined in claim 8, comprising: at least one battery module according to the above embodiments; and a pack case configured to package the at least one battery module.

Moreover, the present invention further provides a vehicle as defined in claim 9, comprising at least one battery pack according to the above embodiments.

### Advantageous Effects

According to various embodiments as above, it is possible to provide a battery module, which may prevent sensing bus bars from being short-circuited when dew condensation occurs in the battery module, and a battery pack and a vehicle including the battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is an exploded perspective view showing the battery module of FIG. 1.
FIG. 3 is a diagram for illustrating a bus bar assembly of the battery module of FIG. 1.
FIGS. 4 and 5 are diagrams for illustrating a main part of the bus bar assembly of FIG. 3.
FIGS. 6 and 7 are diagrams for illustrating a process of preventing sensing bus bars from being short-circuited when dew condensation occurs in the battery module of FIG. 1.
FIG. 8 is a diagram for illustrating a battery pack according to an embodiment of the present disclosure.
FIG. 9 is a diagram for illustrating a vehicle according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways within the scope of the appended claims. In addition, for ease understanding of the present disclosure, the accompanying drawings are not drawn to real scale, but the dimensions of some components may be exaggerated.

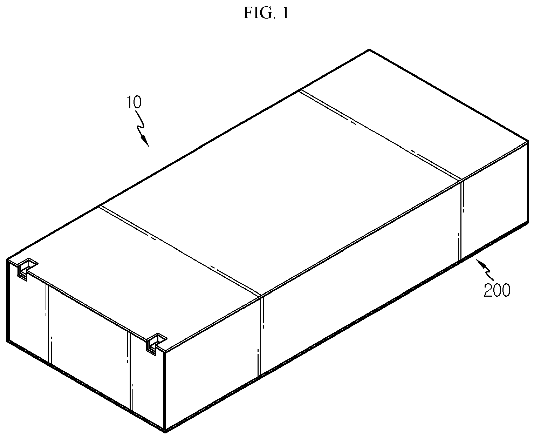

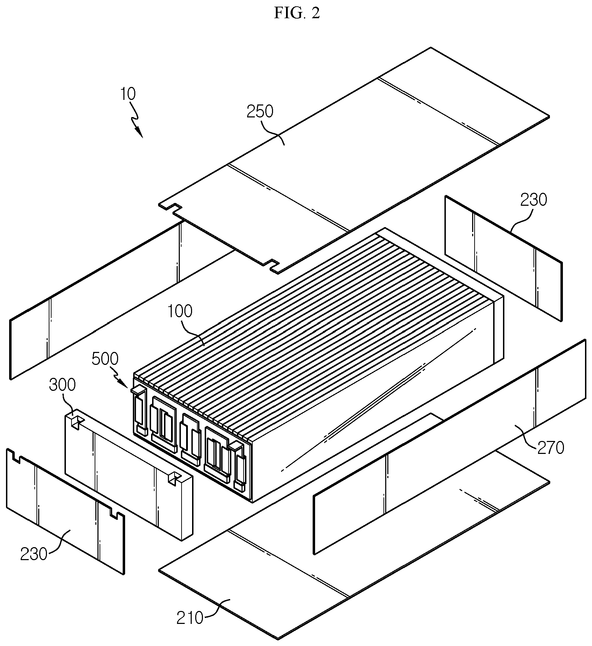

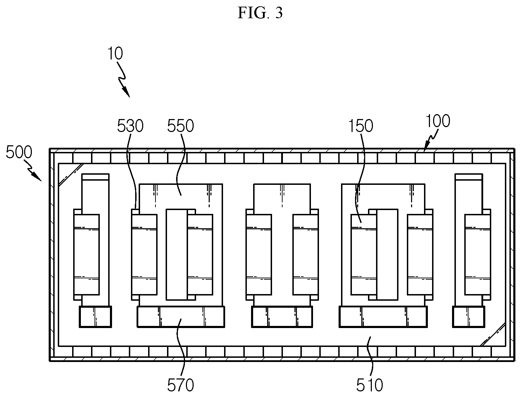

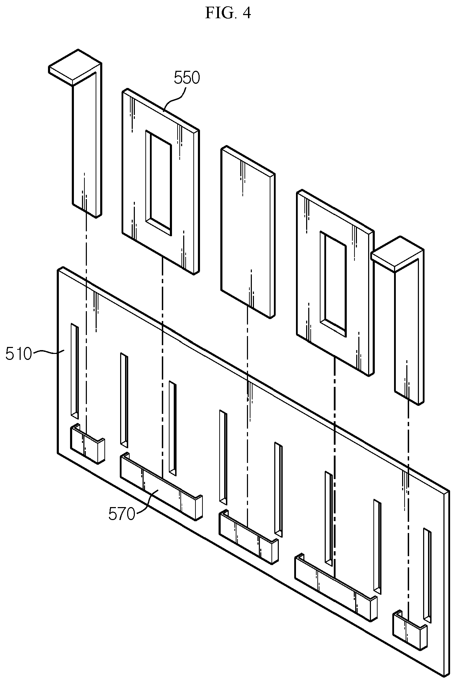

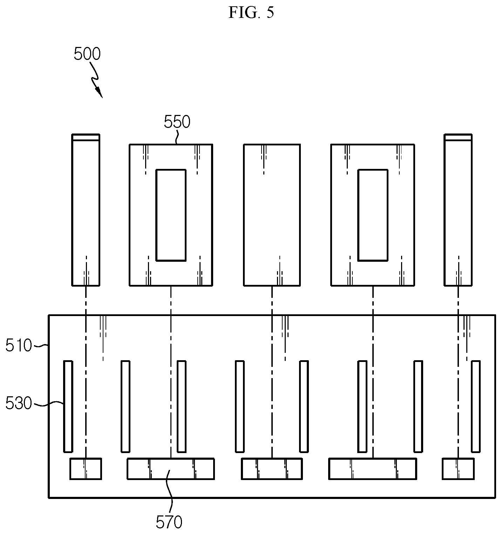

FIG. 1 is a diagram for illustrating a battery module according to an embodiment of the present disclosure, FIG. 2 is an exploded perspective view showing the battery module of FIG. 1, FIG. 3 is a diagram for illustrating a bus bar assembly of the battery module of FIG. 1, and FIGS. 4 and 5 are diagrams for illustrating a main part of the bus bar assembly of FIG. 3.

Referring to FIGS. 1 to 5, the battery module 10 includes a battery cell 100, a module case 200, and a bus bar assembly 500, and may include an insulation cover 300,.

The battery cell 100 is a secondary battery and may be a pouch-type secondary battery, a rectangular secondary battery or a cylindrical secondary battery. Hereinafter, in this embodiment, it will be described that the battery cell 100 is a pouch-type secondary battery.

The battery cell 100 is provided in plural, and the plurality of battery cells 100 may be electrically connected to each other. Each of the plurality of battery cells 100 includes a pair of electrode leads 150.

The pair of electrode leads 150 may be provided at both ends of the battery cell 100. The pair of electrode leads 150 may be electrically connected to each other through a bus bar assembly 300, explained later.

The module case 200 accommodates the plurality of battery cells 100. To this end, the module case 200 may have an accommodation space for accommodating the plurality of battery cells 100.

The module case 200 may include a base plate 210, an end plate 230, a top plate 250, and a side plate 270.

The base plate 210 forms the bottom of the module case 200 and may support the plurality of battery cells 100. To this end, the base plate 210 may have an area capable of supporting a lower portion of the plurality of battery cells 100.

The end plate 230 forms front and rear sides of the module case 200 and may be provided in a pair. The end plate 230 may be coupled with the base plate 210.

The top plate 250 forms an upper portion of the module case 200 and may cover an upper side of the plurality of battery cells 100. The top plate 250 may be coupled with at least one of the pair of end plates 230 and the pair of side plates 270, explained later.

The side plate 270 forms both sides of the module case 200 and may be provided in a pair. The side plate 270 may be coupled with the base plate 210, the pair of end plates 230, and the top plate 250.

The insulation cover 300 may be disposed between the pair of end plates 230 and the bus bar assembly 500, explained later. In addition to the insulation function, the insulation cover 300 may also serve to buffer an impact of the plurality of battery cells 100 from an external impact.

The bus bar assembly 500 is provided inside the module case 200 and is electrically connected to the electrode leads 150 of the plurality of battery cells 100. The bus bar assembly 500 may sense the voltage of the plurality of battery cells 100.

The bus bar assembly 500 includes a bus bar frame 510, a lead slot 530, a sensing bus bar 550, and a short-circuit prevention unit 570.

The bus bar frame 510 is disposed to at least one side of the plurality of battery cells 100. Specifically, the bus bar frame 510 is disposed to at least one of the front and rear sides of the plurality of battery cells 100.

The lead slot 530 is provided in the bus bar frame 510 and is provided in plural. The plurality of lead slots 530 allow the electrode leads 150 of the plurality of battery cells 100 to pass therethrough along a front and rear direction of the bus bar frame 510.

The sensing bus bar 550 is provided in plural. The plurality of sensing bus bars 550 are disposed to face the plurality of lead slots 530 and are connected to the electrode leads 150 of the plurality of battery cells 100 passing through the plurality of lead slots 530.

The short-circuit prevention unit 570 is provided in plural. The plurality of short-circuit prevention units 570 cover at least one end of the plurality of sensing bus bars 550 and surround the at least one end of the plurality of sensing bus bars 550.

Specifically, the plurality of short-circuit prevention units 570 are provided to the bus bar frame 510 to cover the lower end of the plurality of sensing bus bar 550. The plurality of short-circuit prevention units 570 may have a predetermined accommodation space capable of accommodating the lower end of each sensing bus bar 550. Here, the plurality of sensing bus bars 550 may be inserted into the plurality of short-circuit prevention units 570 while sliding from the top to the bottom of the bus bar frame 510.

The plurality of short-circuit prevention units 570 may be integrally formed with the bus bar frame 510. The plurality of short-circuit prevention units 570 may be provided between the lower end of the bus bar frame 510 and the plurality of lead slots 530.

The plurality of short-circuit prevention units 570 may include an insulating material to prevent the plurality of sensing bus bars 550 from being short-circuited when a predetermined condensed water is filled inside the module case 200 due to dew condensation.

Specifically, the plurality of short-circuit prevention units 570 may be made of a rubber material. Meanwhile, the plurality of short-circuit prevention units 570 may be insulation-coated to surround the lower end of each sensing bus bar 550.

Hereinafter, a mechanism for preventing the sensing bus bar 550 from being short-circuited through the short-circuit prevention unit 570 when dew condensation occurs according to this embodiment will be described in more detail.

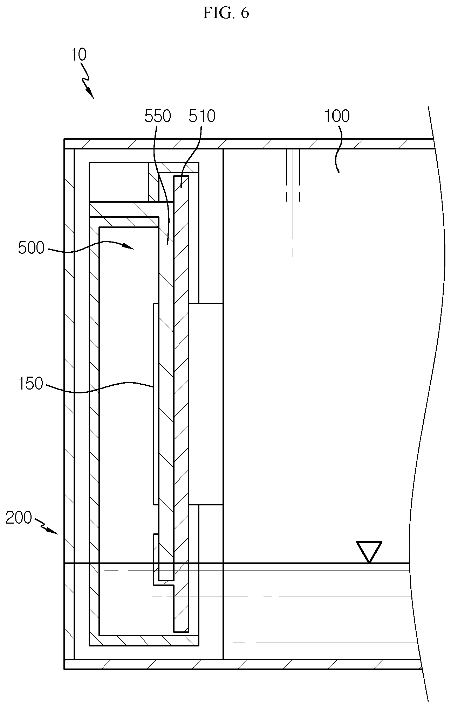

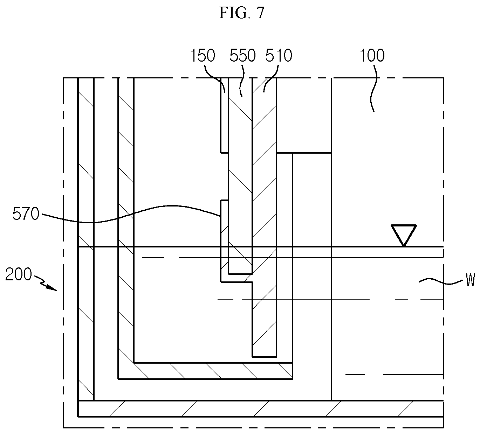

FIGS. 6 and 7 are diagrams for illustrating a process of preventing sensing bus bars from being short-circuited when dew condensation occurs in the battery module of FIG. 1.

Referring to FIGS. 6 and 7, if the battery module 10 is exposed to environmental changes such as temperature change, dew condensation may occur inside the battery module 10. Due to the dew condensation phenomenon, as the internal water vapor rises, the condensed water W may be filled to a predetermined height inside the module case 200 of the battery module 10.

At this time, since the short-circuit prevention unit 570 according to this embodiment made of an insulating material surrounds the lower end of the sensing bus bar 550, it is possible to effectively prevent the sensing bus bar 550 from being short-circuited due to the condensed water W. In addition, the risk of short-circuit between the electrode leads 150 may also be effectively reduced.

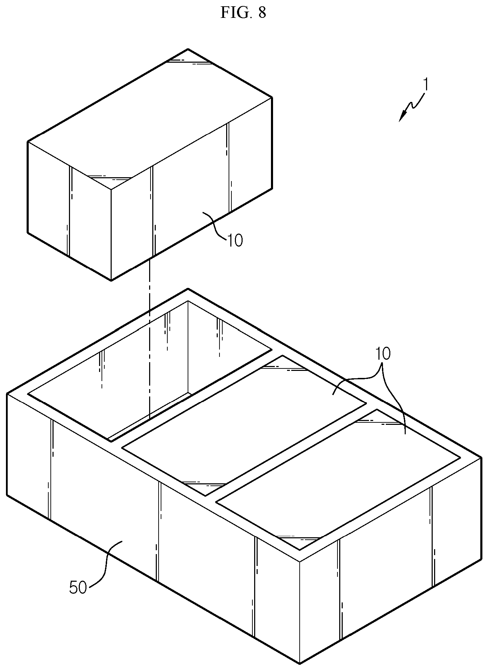

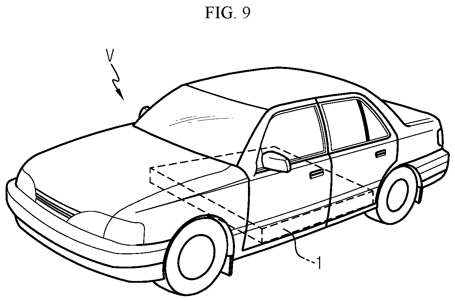

FIG. 8 is a diagram for illustrating a battery pack according to an embodiment of the present disclosure, and FIG. 9 is a diagram for illustrating a vehicle according to an embodiment of the present disclosure.

Referring to FIGS. 8 and 9, a battery pack 1 may include at least one battery module 10 and a pack case 50 for packaging the at least one battery module 10 according to the former embodiment.

The battery pack 1 may be provided to a vehicle V as a fuel source of the vehicle. As an example, the battery pack 1 may be provided to an electric vehicle, a hybrid electric vehicle, and various other-type vehicles V capable of using the battery pack 1 as a fuel source.

In addition, the battery pack 1 may be provided in other devices, instruments or facilities such as an energy storage system using a secondary battery, in addition to the vehicle V.

As described above, the battery pack 1 of this embodiment and devices, instruments or facilities such as a vehicle, which have the battery pack 1, include the battery module 10 as described above, and thus it is possible to implement a battery pack 1 having all the advantages of the battery module 10 described above, or devices, instruments, facilities or the like such as the vehicle V, which have the battery pack 1.

According to various embodiments as above, it is possible to provide a battery module 10, which may prevent sensing bus bars 550 from being short-circuited when dew condensation occurs in the battery module 10, and a battery pack 1 and a vehicle V including the battery module 10.

While the embodiments of the present disclosure have been shown and described, it should be understood that the present disclosure is not limited to the specific embodiments described, and that various changes and modifications can be made within the scope of the appended claims.

## Claims

1. A battery module (10), comprising:
a plurality of battery cells (100);
a module case (200) configured to accommodate the plurality of battery cells (100), wherein the module case (200) includes a base plate (210) which forms the bottom of the module case (200), the base plate (210) having an area capable of supporting a lower portion of the plurality of battery cells (100); and
a bus bar assembly (500) provided inside the module case (200) and electrically connected to electrode leads (150) of the plurality of battery cells (100),
wherein the bus bar assembly (500) includes:
a bus bar frame (510) disposed to at least one of front and rear sides of the plurality of battery cells (100);
a plurality of lead slots (530) provided in the bus bar frame (510) so that electrode leads (150) of the plurality of battery cells (100) pass therethrough;
a plurality of sensing bus bars (550) disposed to face the plurality of lead slots (530) and connected to the electrode leads (150) of the plurality of battery cells (100); and
a plurality of short-circuit prevention units (570) configured to cover at least one end of the plurality of sensing bus bars (550) and configured to surround the at least one end of the plurality of sensing bus bars (550),
wherein the plurality of short-circuit prevention units (570) are provided to the bus bar frame (510) to cover lower ends of the plurality of sensing bus bars (550).

2. The battery module (10) according to claim 1,
wherein the plurality of short-circuit prevention units (570) have a predetermined accommodation space formed to accommodate the lower end of each sensing bus bar (550).

3. The battery module (10) according to claim 2,
wherein the plurality of sensing bus bars (550) are inserted into the short-circuit prevention units (570) while sliding from the top to the bottom of the bus bar frame (510).

4. The battery module (10) according to claim 1,
wherein the plurality of short-circuit prevention units (570) are integrally formed with the bus bar frame (510).

5. The battery module (10) according to claim 1,
wherein the plurality of short-circuit prevention units (570) are provided between a lower end of the bus bar frame (510) and the plurality of lead slots (530).

6. The battery module (10) according to claim 1,
wherein the plurality of short-circuit prevention units (570) have an insulating material.

7. The battery module (10) according to claim 6,
wherein the plurality of short-circuit prevention units (570) are made of a rubber material.

8. A battery pack (1), comprising:
at least one battery module (10) as defined in claim 1; and
a pack case (50) configured to package the at least one battery module (10).

9. A vehicle (V), comprising:
at least one battery pack (1) as defined in claim 8.

## Patentansprüche

1. Batteriemodul (10), umfassend:
eine Vielzahl von Batteriezellen (100);
ein Modulgehäuse (200), das ausgebildet ist, um die Vielzahl von Batteriezellen (100) unterzubringen, wobei das Modulgehäuse (200) eine Grundplatte (210) einschließt, die den Boden des Modulgehäuses (200) bildet, wobei die Grundplatte (210) eine Fläche aufweist, die zum Stützen eines unteren Abschnitts der Vielzahl von Batteriezellen (100) imstande ist; und
eine Stromschienenanordnung (500), die innerhalb des Modulgehäuses (200) bereitgestellt ist, und elektrisch mit Elektrodenleitungen (150) der Vielzahl von Batteriezellen (100) verbunden ist, wobei die Stromschienenanordnung (500) einschließt:
einen Stromschienenrahmen (510), der an mindestens einer von Vorder- und Rückseiten der Vielzahl von Batteriezellen (100) angeordnet ist;
eine Vielzahl von Leitungsschlitzen (530), die im Stromschienenrahmen (510) bereitgestellt sind, sodass Elektrodenleitungen (150) der Vielzahl von Batteriezellen (100) dorthindurch verlaufen;
eine Vielzahl von Sensorstromschienen (550), die angeordnet sind, um der Vielzahl von Leitungsschlitzen (530) zugewandt zu sein, und mit den Elektrodenleitungen (150) der Vielzahl von Batteriezellen (100) verbunden sind; und
eine Vielzahl von Kurzschlussverhinderungseinheiten (570), die ausgebildet sind, um mindestens ein Ende der Vielzahl von Sensorstromschienen (550) zu bedecken, und ausgebildet sind, um das mindestens eine Ende der Vielzahl von Sensorstromschienen (550) zu umgeben,
wobei die Vielzahl von Kurzschlussverhinderungseinheiten (570) am Stromschienenrahmen (510) bereitgestellt sind, um untere Enden der Vielzahl von Sensorstromschienen (550) zu bedecken.

2. Batteriemodul (10) nach Anspruch 1,
wobei die Vielzahl von Kurzschlussverhinderungseinheiten (570) einen vorbestimmten Unterbringungsraum aufweisen, der gebildet ist, um das untere Ende jeder Sensorstromschiene (550) unterzubringen.

3. Batteriemodul (10) nach Anspruch 2,
wobei die Vielzahl von Sensorstromschienen (550) in die Kurzschlussverhinderungseinheiten (570) eingeführt werden, während sie von der Oberseite zum Boden des Stromschienenrahmens (510) gleiten.

4. Batteriemodul (10) nach Anspruch 1,
wobei die Vielzahl von Kurzschlussverhinderungseinheiten (570) in einem Stück mit dem Stromschienenrahmen (510) gebildet sind.

5. Batteriemodul (10) nach Anspruch 1,
wobei die Vielzahl von Kurzschlussverhinderungseinheiten (570) zwischen einem unteren Ende des Stromschienenrahmens (510) und der Vielzahl von Leitungsschlitzen (530) bereitgestellt sind.

6. Batteriemodul (10) nach Anspruch 1,
wobei die Vielzahl von Kurzschlussverhinderungseinheiten (570) ein Isoliermaterial aufweisen.

7. Batteriemodul (10) nach Anspruch 6,
wobei die Vielzahl von Kurzschlussverhinderungseinheiten (570) aus einem Gummimaterial gefertigt sind.

8. Batteriepack (1), umfassend:
mindestens ein Batteriemodul (10) nach Anspruch 1; und
ein Packgehäuse (50), das ausgebildet ist, um das mindestens eine Batteriemodul (10) zu packen.

9. Fahrzeug (V), umfassend:
mindestens einen Batteriepack (1) nach Anspruch 8.

## Revendications

1. Module (10) de batterie, comprenant :
une pluralité de cellules de batterie (100) ;
un boîtier de module (200) configuré pour recevoir la pluralité de cellules de batterie (100), dans lequel le boîtier de module (200) inclut une plaque de base (210) qui forme le fond du boîtier de module (200), la plaque de base (210) présentant une zone capable de supporter une portion inférieure de la pluralité de cellules de batterie (100) ; et
un ensemble de barres omnibus (500) prévu à l'intérieur du boîtier de module (200) et connecté électriquement à des fils d'électrode (150) de la pluralité de cellules de batterie (100), dans lequel l'ensemble de barres omnibus (500) inclut :
un cadre de barres omnibus (510) disposé sur au moins un parmi des côtés avant et arrière de la pluralité de cellules de batterie (100) ;
une pluralité de fentes de fils (530) prévues dans le cadre de barres omnibus (510) de sorte que des fils d'électrode (150) de la pluralité de cellules de batterie (100) passent à travers celles-ci ;
une pluralité de barres omnibus de détection (550) disposées en regard de la pluralité de fentes de fils (530) et connectées aux fils d'électrode (150) de la pluralité de cellules de batterie (100) ; et
une pluralité d'unités de prévention de court-circuit (570) configurées pour recouvrir au moins une extrémité de la pluralité de barres omnibus de détection (550) et configurées pour entourer l'au moins une extrémité de la pluralité de barres omnibus de détection (550),
dans lequel la pluralité d'unités de prévention de court-circuit (570) sont prévues sur le cadre de barres omnibus (510) pour recouvrir des extrémités inférieures de la pluralité de barres omnibus de détection (550).

2. Module (10) de batterie selon la revendication 1,
dans lequel la pluralité d'unités de prévention de court-circuit (570) présentent un espace de réception prédéterminé formé pour recevoir l'extrémité inférieure de chaque barre omnibus de détection (550).

3. Module (10) de batterie selon la revendication 2,
dans lequel la pluralité de barres omnibus de détection (550) sont insérées dans les unités de prévention de court-circuit (570) tout en glissant depuis le haut vers le bas du cadre de barres omnibus (510).

4. Module (10) de batterie selon la revendication 1,
dans lequel la pluralité d'unités de prévention de court-circuit (570) sont formées d'un seul tenant avec le cadre de barres omnibus (510).

5. Module (10) de batterie selon la revendication 1,
dans lequel la pluralité d'unités de prévention de court-circuit (570) sont prévues entre une extrémité inférieure du cadre de barres omnibus (510) et la pluralité de fentes de fils (530).

6. Module (10) de batterie selon la revendication 1,
dans lequel la pluralité d'unités de prévention de court-circuit (570) présentent un matériau isolant.

7. Module (10) de batterie selon la revendication 6,
dans lequel la pluralité d'unités de prévention de court-circuit (570) sont constituées d'un matériau en caoutchouc.

8. Bloc-batterie (1), comprenant :
au moins un module (10) de batterie tel que défini par la revendication 1 ; et
un boîtier (50) de bloc configuré pour mettre sous boîtier l'au moins un module (10) de batterie.

9. Véhicule (V), comprenant :
au moins un bloc-batterie (1) tel que défini par la revendication 8.
